# DEMANDE DE BREVET EUROPEEN

(11) **EP 2 262 237 A1**
(43) Date de publication de la demande: **15.12.2010**
(21) Numéro de dépôt: 10162542.4
(22) Date de dépôt: 11.05.2010
(51) Int. Cl.: H04N 5/445

(54) **Procédé de transmission de notification sur un terminal de restitution**

(30) Priorité: 09.06.2009 FR 0953825
(71) Demandeur: France Telecom, 75015 Paris (FR)
(72) Inventeur: BESOMBE, Philippe, 22700 Louannec (FR); TOUTAIN, François, 22700 Louannec (FR)
(74) Mandataire: Le Saux, Gaël

(57) **Abrégé**

L'invention concerne un procédé de transmission d'une notification à un terminal de restitution (TR) d'un utilisateur.

Selon l'invention, un tel procédé comprend :
- une étape de réception par un équipement intermédiaire (C), d'une requête de notification (RqN) émise depuis un équipement demandeur (D, E) ;
- une étape de construction, par ledit équipement intermédiaire (C), d'une notification ;
- une étape de transmission de ladite notification à un module de traitement de notification (A) apte à transmettre des signaux de restitution audiovisuelle audit terminal de restitution (TR) par l'intermédiaire d'un module de restitution (B) ;
- une étape de traitement de ladite notification par ledit module de traitement (A) permettant la restitution de ladite notification par ledit module de restitution (B).

## Description

### 1 DOMAINE DE L'INVENTION

La présente invention se rapporte au domaine de la transmission de données entre équipements multimédia. Plus particulièrement, la présente invention se rapporte à un système et un procédé de notification, d'un équipement demandeur à un terminal de restitution.

La présente invention trouve son application dans tous les usages quotidiens des équipements multimédias tels que les écrans plats numériques, les STB (de l'anglais « Set Top Box »), les enregistreurs numériques, les cadres numériques et bien sur tout type de terminal mobile ou non, qui peut être connecté à un réseau de communication (que ce soit un réseau local privé d'un utilisateur ou un réseau étendu de communication fixe ou mobile).

Plus précisément, l'invention concerne un système qui permet à un équipement de restitution d'afficher des notifications en provenance d'autres équipements qui sont connectés, plus ou moins directement, à l'équipement de restitution.

On entend par notification, tout message à caractère informatif ou non et requérant l'attention de l'utilisateur. Une telle notification peut par exemple être un message avertissant de l'arrivée d'un courrier électronique, un message avertissant d'un appel téléphonique entrant, un message avertissant de la fin d'un enregistrement d'une émission télévisée ou encore un message en provenance d'un système de surveillance quelconque. Les notifications peuvent requérir une intervention de l'utilisateur, par exemple lorsqu'il s'agit de répondre à un appel téléphonique entrant.

### 2 ART ANTERIEUR

Parmi les équipements de restitution auxquels se réfère l'invention, on trouve plus particulièrement le téléviseur. Les équipements actuels qui sont raccordés au téléviseur dans un domicile sont en compétition les uns par rapport aux autres pour l'accès à l'écran.

C'est généralement l'utilisateur qui arbitre, en choisissant explicitement la source vidéo qui, à un moment donné, peut s'afficher sur l'écran de télévision. Ces équipements incluent par exemple un lecteur de DVD, un terminal d'opérateur pour recevoir la télévision par ADSL, un tuner dit « TNT » pour la télévision numérique terrestre, ou encore une console de jeu.

Les téléviseurs récents savent afficher automatiquement une source lorsque celle-ci est mise en fonctionnement. Cela provoque le plus souvent la disparition de la source en cours d'affichage au profit de la source nouvellement mise en fonctionnement. Par exemple si l'utilisateur est en cours de visualisation d'une émission à l'aide d'un tuner TNT et qu'il allume sa console de jeu, un téléviseur récent basculera vers la restitution des données en provenance de la console de jeu (données audio et vidéo).

Dans l'état actuel, lorsqu'un équipement particulier (par exemple un terminal d'opérateur de type STB) est en train de fournir du contenu vidéo à un téléviseur, cet équipement particulier peut aussi, en parallèle et lorsqu'il en a la capacité, afficher une notification, qui peut être un simple message d'alerte ou une version plus évoluée, par exemple qui requiert un choix de la part de l'utilisateur. Cependant, si le téléviseur affiche une autre source vidéo que l'équipement particulier, ce dernier ne dispose plus d'aucun moyen pour afficher son message à coup sûr.

Il existe également des équipements non raccordés au téléviseur, par exemple l'ordinateur ou le cadre photo, ou encore le téléphone fixe. Ces équipements n'ont, eux, aucun moyen d'afficher quoi que ce soit sur l'écran du téléviseur.

Ainsi, lorsqu'une source est sélectionnée, le téléviseur ne dispose d'aucun moyen pour afficher des notifications en provenance des autres sources audio ou vidéo. Un équipement raccordé à un téléviseur ne peut donc pas, à coup sûr, afficher une notification sur l'écran du téléviseur. De plus, un équipement qui n'est pas raccordé du tout au téléviseur ne dispose d'aucun moyen d'afficher un message et se voit complètement déconnecté du téléviseur et de l'interface privilégiée qu'il représente avec l'utilisateur.

### 3 RESUME DE L'INVENTION

L'invention ne présente pas ces inconvénients de l'art antérieur. En effet, l'invention concerne un procédé de transmission d'une notification à un terminal de restitution d'un utilisateur. Selon l'invention, un tel procédé comprend :
- une étape de réception par un équipement intermédiaire, d'une requête de notification émise depuis un équipement demandeur ;
- une étape de construction, par ledit équipement intermédiaire, d'une notification ;
- une étape de transmission de ladite notification à un module de traitement de notification apte à transmettre des signaux de restitution audiovisuelle audit terminal de restitution par l'intermédiaire d'un module de restitution ;
- une étape de traitement de ladite notification par ledit module de traitement permettant la restitution de ladite notification par ledit module de restitution.

Ainsi, l'invention permet à un équipement de provoquer, à coup sûr, l'affichage d'une notification sur le terminal de restitution, tel que le téléviseur ou un ordinateur d'un utilisateur. L'invention permet donc de s'assurer qu'un équipement demandeur, bien que ne disposant pas d'un accès au terminal de restitution, puisse tout de même faire afficher à celui-ci une notification à destination de l'utilisateur pour l'informer de la survenance d'un évènement. Le procédé de l'invention, mis en oeuvre au sein d'un équipement spécifique tel qu'un serveur dialoguant avec le module de traitement de notification, assure que les notifications seront affichées par ce module de traitement de notifications. Il est important, selon l'invention, que le module de traitement soit apte à transmettre des signaux de restitution au terminal de restitution puisque cela garantit que la notification sera correctement présentée à l'utilisateur.

Selon une caractéristique particulière de l'invention, ledit module de traitement de notification est intégré audit terminal de restitution.

Ainsi, l'invention permet de faciliter la prise en charge des notifications en ne nécessitant pas de dispositif ou de composant complémentaire.

Selon une caractéristique particulière de l'invention, ledit procédé comprend préalablement à ladite étape de réception de ladite requête, une étape de construction de ladite requête de notification qui comprend :
- un identifiant d'un équipement demandeur ;
- une donnée représentative d'une priorité de ladite requête ;
- un contenu à traiter.

Selon un mode de réalisation particulier de l'invention, ladite étape de traitement comprend :
- une étape de détermination, par ledit module de traitement de notification, d'une priorité de ladite notification en fonction d'au moins une autre notification en cours de traitement ;
- une étape de restitution de ladite notification par ledit équipement de restitution en fonction de ladite priorité ;

Ainsi, l'invention permet de ne pas afficher une multitude d'information de manière simultanée, mais au contraire de prioriser, voir de temporiser la restitution.

Selon un mode de réalisation particulier de l'invention, ladite étape de création de ladite notification comprend :
- une étape d'identification dudit équipement de restitution destinataire de ladite notification ;
- une étape d'association de ladite notification audit équipement de restitution en cas de recherche fructueuse ;
- une étape d'association de ladite notification à tous les équipements de restitution connus dudit utilisateur en cas de recherche infructueuse.

Ainsi l'invention permet de transmettre les notifications même lorsqu' aucun équipement de restitution spécifique n'est identifié. Ceci permet d'avertir les utilisateurs de manière globale, par exemple dans le cas de notification importante.

Selon un mode de réalisation particulier de l'invention, ladite étape de recherche dudit équipement de restitution destinataire de ladite notification comprend une étape de recherche au sein d'une table de correspondance entre des identifiants d'équipements demandeurs et un identifiant de module de restitution associé audit équipement de restitution.

Ainsi, l'invention permet de gérer de manière efficace les équipements demandeurs et les notifications qui doivent être transmises aux équipements de restitution. En effet, la table de correspondance permet d'associer des équipements demandeurs et des équipements de restitution par l'intermédiaire de l'identifiant du module de restitution. Ceci permet une grande souplesse dans la gestion des équipements de restitution et notamment permet :
- de faire en sorte qu'une notification soit restituée sur plusieurs terminaux de restitution, ce qui peut être important dans le cas de l'arrivée de communications entrantes par exemple ;
- de faire en sorte qu'une notification soit restituée sur un équipement de restitution adapté à la notification, par exemple un terminal de restitution personnel (tel qu'un téléviseur se trouvant dans une pièce déterminé du logement). Ceci peut être important lorsque la notification concerne un équipement demandeur spécifiquement connecté à un seul terminal de restitution.

Selon une caractéristique particulière de l'invention ledit procédé comprend une étape de vérification d'une identité d'adresse entre ledit équipement demandeur et ledit module de traitement de notification.

Ainsi on s'assure que les parties à la transmission de la notification appartiennent bien au même réseau de communication.

Selon une caractéristique particulière de l'invention, ledit procédé comprend une étape de chiffrement de ladite requête de notification.

Ainsi l'invention permet d'assurer la confidentialité des informations transmises.

Selon un autre aspect, l'invention porte sur un système de transmission d'une notification à un terminal de restitution d'un utilisateur. Selon l'invention un tel système comprend :
- des moyens de réception par un équipement intermédiaire, d'une requête de notification émise depuis un équipement demandeur ;
- des moyens de construction, par ledit équipement intermédiaire, d'une notification ;
- des moyens de transmission de ladite notification à un module de traitement de notification apte à transmettre des signaux de restitution audiovisuelle audit terminal de restitution par l'intermédiaire d'un module de restitution ;
- des moyens de traitement de ladite notification par ledit module de traitement permettant la restitution de ladite notification par ledit module de restitution.

Selon un autre aspect l'invention concerne un dispositif de transmission d'une notification à un terminal de restitution d'un utilisateur, ladite notification étant traitée par un module de traitement permettant la restitution de ladite notification par un module de restitution situé au sein dudit terminal de restitution. Selon l'invention un tel dispositif comprend :
- des moyens de réception, d'une requête de notification émise depuis un équipement demandeur ;
- des moyens de construction d'une notification;
- des moyens de transmission de ladite notification audit module de traitement de notification apte à transmettre des signaux de restitution audiovisuelle audit terminal de restitution par l'intermédiaire dudit module de restitution.

Un tel dispositif peut par exemple se présenter sous la forme d'une « set top box » (récepteur numérique) d'un opérateur de télécommunication.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de transmission tel que décrit précédemment.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un système selon l'invention;
- la figure 2 illustre le procédé de transmission de notification à l'aide du système de la figure 1 ;
- la figure 3 décrit une variante du système de l'invention;
- La figure 4 décrit un équipement intermédiaire selon l'invention.

### 5 DESCRIPTION DETAILLEE DE L'INVENTION

### 5.1 Rappel du principe de l'invention

L'invention permet de manière générale, à un équipement demandeur, situé par exemple dans un réseau domestique, d'afficher une notification sur l'écran d'un terminal de restitution, quel que soit le contenu en cours d'affichage par celui-ci. En particulier, un équipement demandeur connecté au terminal de restitution mais dont la sortie n'est pas actuellement présentée à l'écran de celui-ci peut, en utilisant le système de l'invention, provoquer quand même l'affichage d'un message sur l'écran du terminal de restitution.

L'invention permet également de gérer les conflits d'affichage qui peuvent survenir lorsque plusieurs équipements demandeurs souhaitent simultanément afficher des messages sur le même écran.

Pour ce faire, l'invention repose en partie sur un équipement spécifique, appelé équipement intermédiaire capable de réaliser le traitement et la transmission des notifications au terminal de restitution. Selon l'invention, le procédé de transmission de notification comprend les étapes suivantes :
- une étape de réception par l'équipement intermédiaire, d'une requête de notification émise depuis un équipement demandeur ;
- une étape de construction, par l'équipement intermédiaire, d'une notification. Le format de la notification construite est adapté à la technologie de notification utilisée. Dans la plupart des cas, il s'agit d'un format à base de marqueur de type XML.
- une étape de transmission de la notification à un module de traitement de notification apte à transmettre des signaux de restitution audiovisuel au terminal de restitution par l'intermédiaire d'un module de restitution, ou en d'autres termes un équipement qui peut afficher des données sur le terminal de restitution quelque soit la source audio/vidéo en cours de restitution ;
- une étape de traitement de la notification par le module de traitement permettant la restitution de la notification par le module de restitution.

Dans un mode de réalisation particulier, l'invention met en oeuvre une architecture de composants techniques développées sous la marque « Yahoo ! ™ Connected TV ™ ». Cette architecture permet à un téléviseur d'obtenir des contenus à partir de serveurs web présents sur Internet. Pour ce faire, le téléviseur compatible avec cette architecture dispose physiquement d'une connexion à un réseau (soit une connexion sans fil de type « WiFi », soit une connexion filaire à l'aide du réseau Ethernet). Un tel téléviseur dispose également d'un client, typiquement un client HTTP, qui peut afficher, sur requête de l'utilisateur, du contenu en provenance du réseau Internet. Ce contenu peut prendre plusieurs formes : contenu audio vidéo, informations générales, météorologiques ou boursières. Dans l'état actuel du développement de cette technologie, les informations sont présentées à l'utilisateur sous la forme de « Widget » (terme anglais signifiant « gadget »). Les systèmes de Widget ont été initialement introduits dans certains systèmes d'exploitation d'ordinateurs personnels afin d'informer en continu l'utilisateur. L'architecture de composants techniques développée sous la marque «Yahoo!™ Connected TV ™ » est une implémentation du système de Widget sur un téléviseur. Plus particulièrement, Un Widget est une petite application informatique disposant d'une interface graphique et d'une connexion à un réseau informatique pour accéder à un serveur de données. Le Widget se charge d'afficher les données du serveur à l'écran, en respectant les souhaits de l'utilisateur tels qu'il les exprime par le biais de l'interface et de la configuration de l'application.

Dans ce mode de réalisation particulier, l'invention tire partie de cette architecture de base. En effet, les inventeurs ont constaté qu'il était déconcertant de pouvoir avoir accès à de nombreux contenus situés sur Internet depuis son téléviseur, mais qu'il n'était pas possible d'avoir des informations à propos de ce qu'il se passait dans le propre réseau de l'utilisateur (la plupart du temps local), ce qui constitue une sorte de paradoxe.

L'invention apporte une réponse à cet état paradoxal.

Par exemple, dans un système où le terminal de restitution (un téléviseur) implémente les techniques de l'invention, un utilisateur joue sur son téléviseur à un jeu vidéo qui s'exécute sur la console de salon. Pour cela, il a commuté l'affichage du téléviseur sur l'entrée auxiliaire adéquate (ou le téléviseur a commuté de manière automatique). Ce téléviseur est muni d'un système d'affichage de Widgets qui constitue le module de traitement de notification. Selon l'invention, un Widget particulier, le widget de notification (WN), est en veille. Le Widget est le module de restitution qui est utilisé pour affiché l'information sur le terminal de restitution.

Dans cet exemple, le terminal d'opérateur de type STB (équipement demandeur) est actif, mais son signal vidéo est ignoré par le téléviseur car celui-ci restitue le signal en provenance de la console de jeu vidéo (deuxième équipement demandeur). Lorsqu'un appel visio (par exemple) se présente, la passerelle résidentielle du domicile interagit de manière classique avec le terminal d'opérateur afin de provoquer l'affichage de l'appel entrant sur le téléviseur.

Pour que l'appel soit à coup sur présenté à l'utilisateur, le terminal d'opérateur (qui est donc l'équipement demandeur) construit, selon l'invention, une requête de notification et la communique à un serveur de notification qui est l'équipement intermédiaire entre l'équipement demandeur et le terminal de restitution. Le widget de notification (WN), qui selon l'invention est constamment à l'écoute du serveur de notification, reçoit cette requête, transformée par le serveur (l'équipement intermédiaire) sous la forme d'une notification et traitée par le module de traitement de notification et peut effectuer l'affichage du message.

Alternativement, la passerelle résidentielle peut, lors de l'appel entrant, avoir la capacité de construire elle-même la requête et de la faire suivre au serveur de notification. Dans ce cas, l'équipement demandeur est la passerelle résidentielle. On note que dans ce cas de figure, l'équipement demandeur n'est pas directement connecté au terminal de restitution (le téléviseur) pour afficher un signal audio et/ou vidéo. Ceci est un mode de réalisation particulier de l'invention.

Dans le cas où plusieurs équipements demandeurs requièrent simultanément l'affichage d'un message à l'écran, ils construisent respectivement leur requête et la transmettent au serveur de façon indépendante, et c'est le serveur et/ou le widget de notification qui se préoccupe de coordonner l'affichage au niveau du téléviseur, ce qui peut être fait :
- En fonction d'un critère de priorité, lié à l'équipement émetteur de la demande, transmis dans la requête ;
- En sérialisant les messages, avec une temporisation dans leur présentation ou une pagination faite à l'initiative de l'utilisateur (touche "suivant") ;

Par la suite, on présente notamment le cas d'une mise en oeuvre du procédé de l'invention à l'aide d'une architecture adéquate et en se basant sur les techniques des Widget. Il est clair cependant que l'invention ne se limite pas à cette application particulière, mais peut également être mise en oeuvre de nombreuses autres manières.

### 5.2 Description d'un mode de réalisation

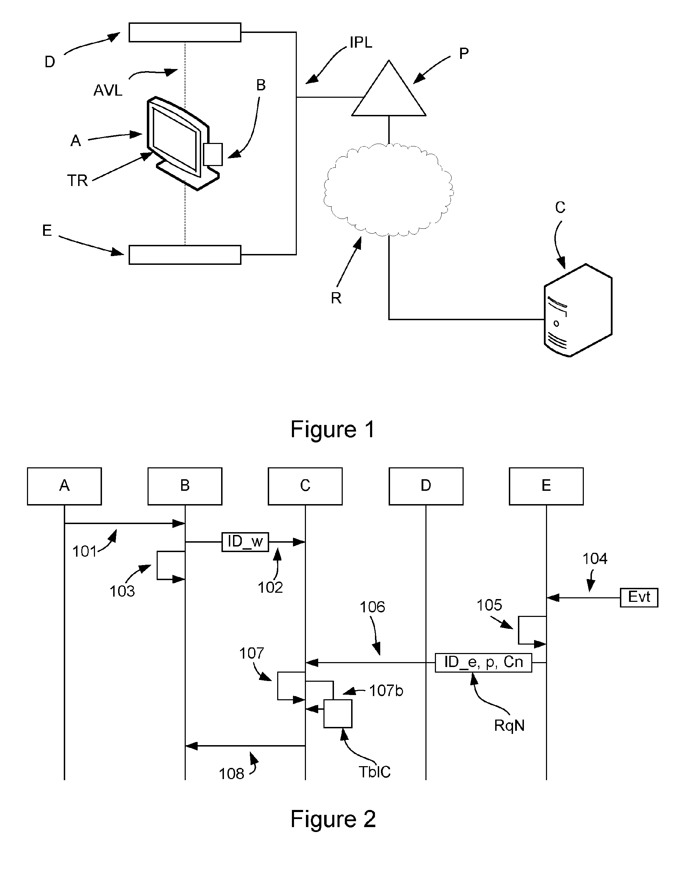

On présente, en relation avec les figures 1 & 2, la mise en oeuvre du procédé de l'invention à un terminal de restitution TR équipé d'un moteur d'exécution de Widget A, qui joue le rôle de module de traitement de notification tel que présenté précédemment.

Dans ce mode de réalisation de l'invention, le procédé repose également sur:
- un widget de notification B, jouant le rôle de module d'affichage, instancié dans le moteur d'exécution A sur le terminal de restitution TR ;
- un serveur de notification C jouant le rôle d'équipement intermédiaire, qui peut être localisé :
- dans le coeur de réseau R, au-delà du réseau domestique, délimité par la passerelle résidentielle P ;
- dans le réseau domestique, par exemple au sein de la passerelle résidentielle P ou de tout autre équipement adéquat ;
- voire, dans un mode de réalisation particulier, dans le terminal de restitution lui-même.

Pour illustrer les cas d'usages présenté, les figures 1 & 2 font également référence à des équipements demandeur, car ils sont en quelque sorte à l'origine des notifications à transmettre :
- un équipement de type console de jeu D raccordé au terminal de restitution par un lien audiovisuel AVL et raccordé au réseau résidentiel par une connexion réseau IPL ;
- un second équipement E, de type set-top box, raccordé au terminal de restitution par un lien audiovisuel AVL et raccordé au réseau résidentiel par une connexion réseau IPL.

Bien sûr, ces deux terminaux demandeurs E et D ne sont que des exemples. Tout autre équipement qui bénéficie de capacité de communication peut être envisagé, comme des terminaux de communications mobiles, des ordinateurs, etc. On note d'ailleurs que, selon l'invention, les équipements demandeurs ne sont pas uniquement des équipements destinés à l'origine à être connecté au terminal de restitution comme les magnétoscopes, les enregistreurs numériques, les lecteurs de DVD.

Dans le cas des figures 1 & 2, le serveur C est localisé dans le coeur de réseau, c'est-à-dire dans le réseau de l'opérateur de télécommunication. Une telle implémentation présente entre autres avantages de pouvoir permettre la fourniture de notifications dites « étendues », qui concernent :
- soit des équipements de l'utilisateur que ce dernier n'est pas techniquement à même de connecter à son réseau résidentiel personnel par exemple un terminal mobile de type GSM ;
- soit des services propres à l'utilisateur telle qu'une messagerie.

### Mécanisme de notification

Lorsque le terminal de restitution est allumé, le système d'exécution de widgets A, conformément à sa configuration de démarrage, initialise 101 le widget de notification B. Ce widget se connecte 102 au serveur de notification C, en lui indiquant un identifiant de widget : « ID_w », et se met en attente 103 de nouvelle notification à afficher.

L'utilisateur fait usage de la console de jeu D, pour cela il commute l'affichage vidéo du terminal de restitution le téléviseur sur l'entrée correspondant au signal de la console.

Un événement donné Evt par exemple, un appel téléphonique entrant dans le réseau par la passerelle résidentielle P conduit 104 la set-top box E à souhaiter notifier visuellement l'utilisateur. La set-top box construit 105 alors une requête RqN de notification comportant les informations suivantes:
- Identifiant de l'équipement demandeur E, ID_e ;
- Information de priorité (p) de la requête par exemple, priorité 1 urgente ;
- Contenu de la requête, textuel et/ou graphique (Cn). Par exemple "Appel du 0212345678".

La requête est transmise 106 au serveur de notification C. Celui-ci identifie 107 le ou les widgets qui vont recevoir la notification, par l'un des moyens suivants :
- Si le serveur de notification C est localisé dans le réseau domestique, il peut alors transmettre 107 la requête à tous les widgets actifs qu'il connaît ;
- Si le serveur C est localisé dans le coeur de réseau, il doit procéder à une recherche 107b au sein d'une table de correspondance TblC entre les identifiants d'équipements demandeurs et les identifiants de widget. Cette table peut avoir été préalablement renseignée par l'utilisateur ou par l'opérateur en fonction des informations dont il dispose.

Le serveur fait alors suivre 108 la requête auprès du ou des widgets identifiés B. Chaque widget recevant la requête et apte à la prendre en charge, se charge d'afficher le message qu'elle renferme et si besoin de mettre en oeuvre un dialogue avec l'utilisateur.

### Notifications multiples & Gestion des conflits

Lorsque plusieurs équipements terminaux transmettent une requête de construction de notification, l'invention permet de résoudre le conflit d'accès à l'écran du terminal de restitution. En effet, dans ce cas le serveur C et le widget B de notification peuvent coordonner l'affichage des messages, compte tenu des niveaux de priorité qui accompagnent les requêtes.

Un premier traitement possible consiste à sérialiser les requêtes de même priorité, afin de laisser le temps à l'utilisateur d'en prendre connaissance. Une temporisation, ou une action explicite demandée à l'utilisateur par exemple "suivant", permettent l'affichage du message qui suit.

Lorsqu'un message d'un niveau priorité donné est en cours d'affichage, et qu'une requête pour un message plus prioritaire est transmise au widget B, celui-ci peut remplacer le message en cours par le message plus prioritaire, tout en donnant à l'utilisateur la possibilité d'afficher à nouveau le premier message par exemple "précédent".

### Mécanismes de sécurité

Dans certains cas d'usage, il peut s'avérer indispensable de sécuriser le mécanisme de notification mis en oeuvre par l'invention. Pour cela, plusieurs moyens peuvent être mis en oeuvre selon l'invention :
- Le serveur C peut vérifier que la même adresse IP adresse publique de la Passerelle résidentielle P est utilisée par les deux parties de l'échange : module de traitement de notification A et équipement demandeur (D, E). En d'autres termes, on vérifie l'identité d'adresse entre l'équipement demandeur et le module de traitement de notification A pour s'assurer qu'ils appartiennent bien au même réseau résidentiel.
- Pour une sécurité accrue, un chiffrement de la requête de notification peut être réalisé. Dans ce cas, une partie de la requête est chiffrée par l'équipement E au moyen d'une clé publique fournie par le widget de notification. Celui-ci dispose d'une clé privée de déchiffrement, lui permettant seul de récupérer le message.

### Variantes de mise en oeuvre

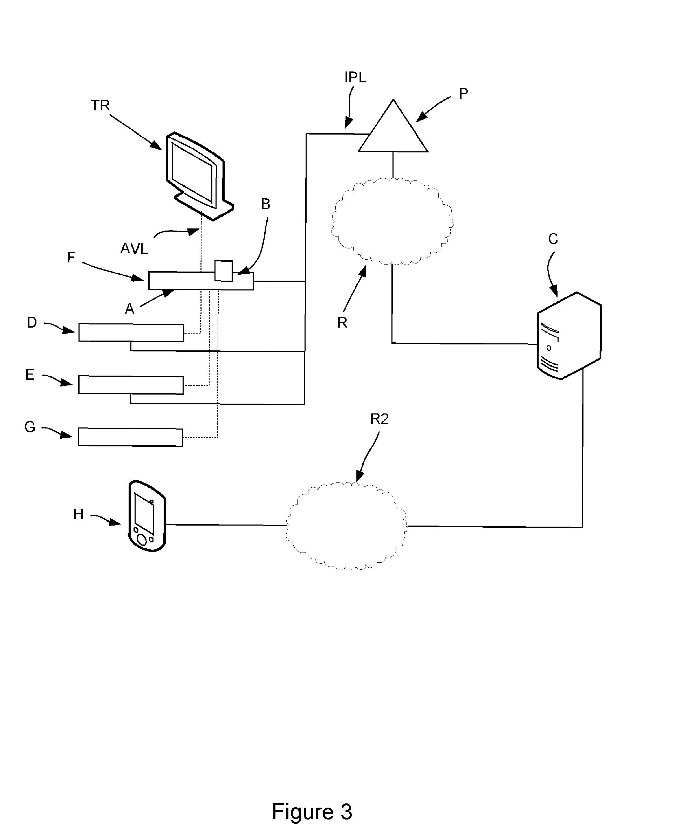

Dans une variante du système de l'invention, présenté en relation avec la figure 3, particulièrement adapté aux équipements de restitution classique ne disposant pas de fonction de communications, le moteur d'exécution des widgets A est mis en oeuvre dans un équipement audiovisuel spécifique F connecté par liaison audio et/ou vidéo au terminal de restitution TR. Ce dernier est alors quelconque dépourvu du moteur d'exécution de widgets. Cette variante du système de l'invention est particulièrement intéressante pour une implantation de masse.

Afin que les notifications puissent être affichées en toutes situations, il est alors nécessaire que l'équipement F soit le seul à fournir un signal vidéo au terminal de restitution. Ceci est possible à condition que l'équipement F dispose de plusieurs entrées audio et/ou vidéos, qui vont permettre de raccorder les autres équipements console de jeux, enregistreur numérique. Ainsi, l'équipement F joue en quelque sorte le rôle de "multiprise vidéo" multiples connecteurs HDMI ou péritel par exemple, et peut à tout moment réaliser l'incrustation vidéo d'un message de notification par l'intermédiaire du widget de notification B qui s'exécute au sein de l'équipement F.

Un cas particulier notable (non représenté) est que l'équipement F est en fait la set-top box d'opérateur E et que ces deux équipements forment donc un seul et même équipement.

Dans ce mode de réalisation présenté en relation avec la figure 3, on note que l'équipement G, par exemple un enregistreur numérique, ne dispose pas de fonction de communication (il n'est pas relié par l'intermédiaire d'une connexion IP). Lorsque cet équipement G est démarré, l'équipement F détecte que cet équipement est en activité. L'équipement F, qui est connecté au terminal de restitution TR peut alors :
- soit procéder à la création d'une requête de notification, qui est transmise au serveur C qui se charge ensuite de construire la notification et de la retransmettre à l'équipement F ;
- soit procéder directement à la création de la notification afin d'informer l'utilisateur du démarrage de l'équipement G. Cette deuxième possibilité présente l'avantage de ne pas nécessiter de trafic réseau.

Dans ce mode de réalisation présenté en relation avec la figure 3, on note que l'équipement H est connecté à un réseau R2. Dans ce cas, l'équipement H peut, lorsqu'un évènement survient (par exemple l'arrivée d'un SMS, ou un appel entrant) :
- transmettre une requête de notification au serveur C pour que celui-ci puisse transmettre une notification à destination du Widget B ;
- ne rien faire. Dans ce cas, c'est le réseau de l'opérateur qui détecte l'évènement et transmet une requête de notification au serveur C. Ce dernier cas de figure est particulièrement intéressant puisqu'il ne nécessite pas de modification du terminal mobile G. Il suffit d'inclure une fonction de création de requête de notification dans le réseau de l'opérateur pour que celui-ci puisse transmettre des requêtes de notification au serveur C et ainsi informer l'utilisateur directement sur son terminal de restitution.

### 5.3 Autres caractéristiques optionnelles et avantages

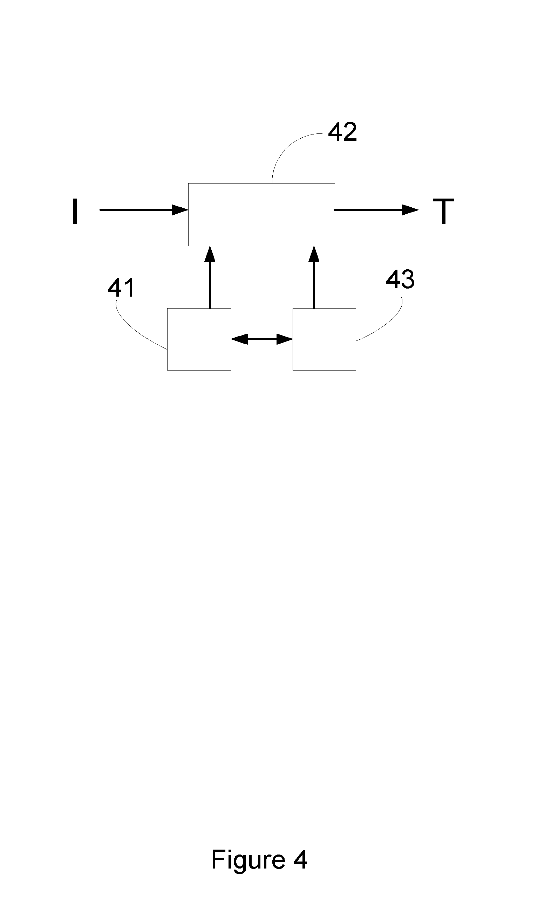

On présente, en relation avec la figure 4, un mode de réalisation d'un équipement intermédiaire selon l'invention.

Un tel équipement comprend une mémoire 41 constituée d'une mémoire tampon, une unité de traitement 42, équipée par exemple d'un microprocesseur, et pilotée par le programme d'ordinateur 43, mettant en oeuvre le procédé de transmission selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I à transmettre (telle qu'une requête de notification en provenance d'un équipement demandeur). Le microprocesseur de l'unité de traitement 42 met en oeuvre les étapes du procédé de transmission décrit précédemment, selon les instructions du programme d'ordinateur 43, pour délivrer une information traitée T (tel qu'une notification à destination d'un module de traitement de notification). Pour cela, l'équipement intermédiaire comprend, outre la mémoire tampon 41, des moyens d'identification du terminal de restitution adéquat, des moyens de déchiffrement de la requête de notification, et des moyens de traitement d'informations, permettant notamment l'exécution du procédé selon l'invention. Ces moyens sont pilotés par le microprocesseur de l'unité de traitement 42.

## Revendications

1. Procédé de transmission d'une notification, devant être restituée sur un terminal de restitution (TR) d'un utilisateur, **caractérisé en ce qu'**il comprend :
- une étape de réception par un équipement intermédiaire (C), d'une requête pour la création d'une notification (RqN), ladite requête étant émise depuis un équipement demandeur (D, E) appartenant audit utilisateur et transmise par l'intermédiaire d'un réseau de communication ;
- une étape de construction, par ledit équipement intermédiaire (C), d'une notification, en fonction du contenu de ladite requête ;
- une étape de transmission de ladite notification à un module de traitement de notification (A) apte à transmettre des signaux de restitution audiovisuelle audit terminal de restitution (TR) par l'intermédiaire d'un module de restitution (B) ;
- une étape de traitement de ladite notification par ledit module de traitement (A) conduisant à la restitution de ladite notification par ledit module de restitution (B).

2. Procédé de transmission selon la revendication 1, **caractérisé en ce que** ledit module de traitement de notification (A) est intégré audit terminal de restitution (TR) :

3. Procédé selon la revendication 1, **caractérisé en ce qu'**il comprend préalablement à ladite étape de réception de ladite requête, une étape de construction de ladite requête de notification, ladite requête de notification comprenant :
- un identifiant (ID_e) d'un équipement demandeur (D, E) ;
- une donnée représentative d'une priorité (p) de ladite requête;
- un contenu à traiter (Cn).

4. Procédé selon la revendication 1, **caractérisé en ce que** ladite étape de traitement comprend :
- une étape de détermination, par ledit module de traitement de notification (A), d'une priorité de ladite notification en fonction d'au moins une autre notification en cours de traitement ;
- une étape de restitution de ladite notification par ledit équipement de restitution (TR) en fonction de ladite priorité ;

5. Procédé selon la revendication 1, **caractérisé en ce que** ladite étape de création de ladite notification comprend :
- une étape d'identification (107, 107b) dudit équipement de restitution TR destinataire de ladite notification ;
- une étape d'association de ladite notification audit équipement de restitution TR lorsque ladite étape d'identification (107, 107b) a permis d'identifier ledit équipement de restitution destinataire ;
- une étape d'association de ladite notification à tous les équipements de restitution connus dudit utilisateur, lorsque ladite étape d'identification (107, 107b) n'a pas permis d'identifier ledit équipement de restitution destinataire.

6. Procédé selon la revendication 5, **caractérisé en ce que** ladite étape de recherche dudit équipement de restitution destinataire de ladite notification comprend une étape de recherche au sein d'une table de correspondance (TbIC) entre des identifiants d'équipements demandeurs et un identifiant de module de restitution (B) associé audit équipement de restitution (TR).

7. Procédé selon la revendication 1, **caractérisé en ce qu'**il comprend une étape de vérification d'une identité d'adresse entre ledit équipement demandeur et ledit module de traitement de notification.

8. Procédé selon la revendication 1, **caractérisé en ce qu'**il comprend une étape de chiffrement de ladite requête de notification (RqN).

9. Système de transmission d'une notification à un terminal de restitution (TR) d'un utilisateur, **caractérisé en ce qu'**il comprend :
- des moyens de réception par un équipement intermédiaire (C), d'une requête pour la création d'une notification (RqN), ladite requête étant émise depuis un équipement demandeur (D, E) et transmise par l'intermédiaire d'un réseau de communication ;
- des moyens de construction, par ledit équipement intermédiaire (C), d'une notification, en fonction du contenu de ladite requête ;
- des moyens de transmission de ladite notification à un module de traitement de notification (A) apte à transmettre des signaux de restitution audiovisuelle audit terminal de restitution (TR) par l'intermédiaire d'un module de restitution (B) ;
- des moyens de traitement de ladite notification par ledit module de traitement (A) conduisant à la restitution de ladite notification par ledit module de restitution (B).

10. Dispositif de transmission (F) d'une notification à un terminal de restitution (TR) d'un utilisateur, ladite notification étant traitée par un module de traitement (A) permettant la restitution de ladite notification par un module de restitution (B) situé au sein dudit terminal de restitution (TR), **caractérisé en ce qu'**il comprend :
- des moyens de réception, d'une requête pour la création d'une notification (RqN), ladite requête étant émise depuis un équipement demandeur (D, E) et transmise par l'intermédiaire d'un réseau de communication ;
- des moyens de construction d'une notification en fonction du contenu de ladite requête ;
- des moyens de transmission de ladite notification audit module de traitement de notification (A) apte à transmettre des signaux de restitution audiovisuelle audit terminal de restitution (TR) par l'intermédiaire dudit module de restitution (B).

11. Programme d'ordinateur **caractérisé en ce qu'**il comprend des instructions de code de programme pour la mise en oeuvre du procédé de transmission selon l'une quelconque des revendications 1 à 8, lorsque ce programme est exécuté par un processeur.
